# EUROPÄISCHE PATENTSCHRIFT

(11) **EP 3 477 794 B1**
(45) Veröffentlichungstag und Bekanntmachung des Hinweises auf die Patenterteilung: **22.04.2020**
(21) Anmeldenummer: 18201245.0
(22) Anmeldetag: 18.10.2018
(51) Int. Cl.: H01R 25/14, H02G 3/06, F21V 21/35, F21V 23/06

(54) **STROMFÜHRUNGSPROFIL UND STROMFÜHRUNGSANORDNUNG**
CURRENT GUIDING PROFILE AND CURRENT GUIDING ARRANGEMENT
PROFILÉ D'ALIMENTATION EN COURANT ET DISPOSITIF D'ALIMENTATION EN COURANT

(30) Priorität: 27.10.2017 DE 102017125267
(43) Veröffentlichungstag der Anmeldung: 01.05.2019
(73) Patentinhaber: Wago Verwaltungsgesellschaft mbH, 32423 Minden (DE)
(72) Erfinder: BIES, Henryk, 04249 Leipzig (DE)
(74) Vertreter: Gramm, Lins & Partner Patent- und Rechtsanwälte PartGmbB

(56) Entgegenhaltungen:
- EP-B1- 1 284 033
- DE-U1-202016 104 790
- FR-E- 61 514
- US-A- 2 269 779
- US-B1- 7 205 477

## Beschreibung

Die Erfindung betrifft ein Stromführungsprofil mit einem elektrisch isolierenden Profilelement, das parallel nebeneinander in eine Längserstreckungsrichtung des Profilelementes erstreckende Nuten hat, die durch ein Paar von Nutseitenwänden begrenzt sind und einen Nutgrund haben, und mit elektrischen Leitern, die in den Nuten des Profilelementes aufgenommen sind, sich parallel nebeneinander in der Längserstreckungsrichtung des Profilelementes erstrecken.

Die Erfindung betrifft weiter eine Stromführungsanordnung mit mehreren in Längserstreckungsrichtung hintereinander angeordneten Stromführungsprofilen.

Solche Stromführungsprofile werden benutzt, um mit Hilfe von elektrischen Anschlusssteckern an beliebigen Positionen entlang des Stromführungsprofils elektrische Energie für elektrische Verbraucher abgreifen zu können und/oder über die Kontaktierung der elektrischen Leiter eine Datenverbindung für Kommunikationszwecke herzustellen. Solche Stromführungsprofile werden z. B. in ein Metall-Tragprofil eingesetzt. Ein Abgriff-Stecker wird dann auf das Stromführungsprofil aufgesteckt, um die in den Nuten eingebauten elektrischen Leiter zu kontaktieren. Auf diese Weise können beispielsweise Leuchten an beliebigen Positionen einfach kontaktiert und auf einem Tragprofil montiert werden.

EP 1 284 033 B1 offenbart ein Stromschienensystem für Leuchten mit einem Stromleitprofil. Um eine Kontaktierung auch an der Schnittstelle zwischen zwei Tragschienen zu ermöglichen, ist ein Verbindungselement vorgesehen, dass den Nuten der Stromleitprofile entsprechende rillenförmige Ausnehmungen aufweist, in die jeweils ein Metallverbinder eingesetzt ist. An diese Metallverbinder sind die miteinander zu verbindenden Drähte von beiden Seiten her anschließbar. Der Metallverbinder bildet eine über die rillenförmige Ausnehmung zugängliche Kontaktierungsfläche. Ein solches aus einem nicht-leitenden Material bestehendes Verbindungselement mit den Metallverbindern schließt die Lücke zwischen den Stromleitprofilen zweier Tragschienen und stellt sicher, dass über die gesamte Länge des Stromschienensystems hinweg ein Leuchten-Modul frei befestigt werden kann, da die Metallverbinder in dem Übergangsbereich die Kontaktierungsflächen für die Anschlusskontakte des Leuchten-Moduls bilden.

Ein im Spritzgussverfahren kostengünstiger herzustellendes Stromleitprofil besteht aus mindestens zwei aneinandergefügten Drahthalterungselementen aus nicht-leitendem Material, welche Nuten zur Aufnahme der Drähte aufweisen. Die Drahthalterungselemente sind in ihren Endbereichen derart ausgebildet, dass sie beim Aneinanderfügen mit an ihren Enden befindlichen Vorsprüngen derart überlappend ineinandergreifen, dass sie in dem Verbindungsbereich zwischen zwei Drahthalterungselementen den Nuten entsprechende und zu der Kontaktierungsseite hin offene Kanäle bilden.

Aus der DE 20 2016 104 790 U1 sind ein Steckverbinder zum endseitigen Aufstecken auf ein Stromführungsprofil sowie entsprechende Stromführungsprofile bekannt.

Ausgehend hiervon ist es Aufgabe der vorliegenden Erfindung ein verbessertes Stromführungsprofil und eine verbesserte Stromführungsanordnung zu schaffen, bei dem in dem Übergang zwischen zwei hintereinander angeordneten Stromführungsprofilen die vorgeschriebenen Luft- und Kriechstrecken auch bei dem bei Kunststoffmaterial auftretenden Längenänderungen sichergestellt wird.

Die Aufgabe wird mit dem Stromführungsprofil mit den Merkmalen des Anspruchs 1 sowie mit durch die Stromführungsanordnung mit den Merkmalen des Anspruchs 13 gelöst. Vorteilhafte Ausführungsformen sind in den Unteransprüchen beschrieben.

Es wird vorgeschlagen, dass das Profilelement Vorsprünge an einer Stirnseite hat, wobei die Vorsprünge aus einer Nutseitenwand oder aus einer Gruppe von Nutseitenwänden mit zwischenliegender Nut gebildet und zum Eintauchen in einen Rücksprung an einer Stirnseite eines angrenzenden Profilelementes ausgebildet sind. Unter einem Vorsprung wird somit eine Verlängerung einer Nutseitenwand oder einer Gruppe von Nutseitenwänden in Längserstreckungsrichtung des Profilelementes verstanden. Ein Rücksprung ist hingegen eine Verkürzung der Nutseitenwand oder Gruppe von Nutseitenwänden oder eine Verbreiterung der Nutbreite so, dass ein Vorsprung in dem Rücksprung aufgenommen werden kann.

Wenn nun Stromführungsprofile in Längserstreckung hintereinander angeordnet werden, dann können die Vorsprünge eines Profilelementes an einer Stirnseite in die Rücksprünge des in Längserstreckungsrichtung daran angrenzenden Profilelementes eintauchen. Die mindestens eine Nutseitenwand eines Vorsprungs setzt dabei die verkürzte oder verschmälerte Nutseitenwand des Rücksprungs fort. Auch wenn zwischen den hintereinander angeordneten Profilelementen Spalte zwischen den Nutseitenwänden vorhanden sind, ist die Luft- und Kriechstrecke von dem Leiter in der durch diese Nutseitenwand begrenzten Nut bis zu dem nächstliegenden elektrischen Leiter verlängert, da sich der Spalt zunächst einmal über die Länge der vorspringenden Nutseitenwand fortsetzt, um dann mit einem Querspalt zu dem benachbarten elektrischen Leiter zu gelangen.

Ein Stromführungsprofil ist dadurch gekennzeichnet, dass es im Vergleich zur Breite relativ lang ist, d.h. es ist wesentlich länger als breit. Die Länge des Stromführungsprofils ist die Dimension in Längsrichtung, d.h. in Längserstreckungsreichtung der Nuten und der darin aufgenommenen elektrischen Leiter. In einer vorteilhaften Ausgestaltung der Erfindung gilt dies auch für ein Profilelement. Die Länge des Stromführungsprofils ist wenigstens fünfmal so groß ist wie die Breite des Stromführungsprofils, oder wenigstens zehnmal so lang wie breit. Die elektrischen Leiter sind in den Nuten dabei über die gesamte Länge des Stromführungsprofils oder zumindest einen wesentlichen Teil der Länge des Stromführungsprofils aufgenommen, z.B. über wenigstens 80 % der Länge des Stromführungsprofils. Die Nuten können über die Länge des Stromführungsprofils eine oder mehrere Unterbrechungen aufweisen, in denen die Leiter auch nicht von den Nuten oder Nutseitenwänden umgeben sind.

Gemäß einer vorteilhaften Ausgestaltung der Erfindung weist das Profilelement eine erste Stirnseite an einem Ende und eine zweite Stirnseite am in Längsrichtung des Profilelementes anderen Ende auf. Die Stromführungsprofile bzw. die Profilelemente sind endlos aneinandersetzbar, indem die erste Stirnseite eines Profilelementes mit der zweiten Stirnseite eines benachbarten Profilelementes aneinandergesetzt wird, sodass eine nach Wahl des Anwenders beliebig lange Anordnung von Profilelementen und hierdurch eine beliebig lange Stromführungsanordnung gebildet werden kann. Zu diesem Zweck sind die Vorsprünge und/oder Rücksprünge an der ersten Stirnseite als Gegenstück zu Vorsprüngen und/oder Rücksprüngen an der zweiten Stirnseite des Profilelementes ausgebildet.

Bei einer Stromführungsanordnung sind somit mehrere in Längserstreckungsrichtung hintereinander angeordnete Profilelemente vorgesehen. Dadurch, dass die Vorsprünge auf einer Stirnseite eines Stromführungsprofils in Rücksprünge an einer Stirnseite des angrenzenden Stromführungsprofils eintauchen, wird die Einhaltung der erforderlichen Luft- und Kriechstrecken auch bei einer Längenvariation der Profilelemente durch Wärmeeinfluss sichergestellt. Die elektrischen Leiter sind dabei jeweils in miteinander fluchtende Nuten des der hintereinander angeordneten Profilelemente eingesetzt.

Die Profilelemente können jeweils an den sich in Längserstreckungsrichtung diametral einander gegenüberliegenden Stirnseiten Vorsprünge und/oder Rücksprünge haben. Damit lassen sich die identisch aufgebauten Profilelemente aneinander reihen.

Die Profilelemente können an einer Stirnseite jeweils alternierend Vorsprünge und Rücksprünge haben. Dadurch werden auch bei Anordnung der benachbarten elektrischen Leiter auf einer gemeinsamen Ebene die Luft- und Kriechstrecken zwischen diesen benachbarten elektrischen Leiter ausreichend groß gehalten.

Die nebeneinander liegenden Nuten können jeweils höhenversetzt zueinander angeordnet sein. Auf diese Weise werden die Luft- und Kriechstrecken noch weiter um den Höhenversatz vergrößert. Der Höhenversatz ist das Abstandsmaß der benachbarten elektrischen Leiter oder der Nutgründe benachbarter Nuten in die Eintauchrichtung in eine Nut von der offenen Oberseite der Nut zum Nutgrund hin gesehen.

Eine erste Gruppe von Nuten kann mit ihrem Nutgrund eine erste Ebene aufspannen. Eine zweite Gruppe von Nuten, die jeweils zwischen zwei Nuten der ersten Gruppe angeordnet sind, kann mit ihren Nutgründen eine zweite Ebene aufspannen. Die erste und zweite Ebene kann dann höhenversetzt zueinander angeordnet sein. D.h., dass die Nuten quer zur Längserstreckungsrichtung des Profilelementes gesehen alternierend höhenversetzt sind. Die benachbarten Nuten sind somit alternierend unterschiedlich tief, so dass die benachbarten elektrischen Leiter alternierend höhenversetzt angeordnet sind.

Diametral gegenüberliegend zu einem Vorsprung kann auf einer Stirnseite des Profilelementes ein Rücksprung aus einer diametral gegenüberliegenden Stirnseite des Profilelementes vorhanden sein. D.h., dass eine Nutseitenwand eines Profilelementes auf einer Stirnseite relativ zu einer benachbarten Stirnseitenwand vorsteht und auf der gegenüberliegenden Stirnseite zu dieser benachbarten Nutstirnseitenwand zurückspringt. Damit können die Profilelemente gleicher Bauart in einer Flucht hintereinander so angeordnet sein, dass ein Vorsprung eines Profilelementes in einen Rücksprung des angrenzenden Profilelementes eintaucht, ohne dass die Profilelemente anders gestaltet oder seitenversetzt sein müssen.

Die Nuten können jeweils durch eine an einer Stirnseite längere, vorspringende erste Nutseitenwand auf einer Längsseite an der jeweiligen Nut und durch eine relativ zur ersten Nutseitenwand kürzere Nutseitenwand derselben Nut begrenzt sein. Dies hat den Vorteil, dass eine Nutseitenwand jeweils zur Begrenzung einer rechts und links benachbarten Nut benutzt werden kann. Damit kann die Baubreite der Profilelemente weiter verringert werden. Zwischen den elektrischen Leitern befindet sich dann nur eine Nutseitenwand mit der Isolationswandstärke der Nutseitenwand. Durch die Vor- und Rücksprünge der ineinander greifenden Nutseitenwände werden dennoch die erforderlichen Luft- und Kriechstrecken unter Bereitstellung einer Längenausgleichsmöglichkeit sichergestellt. Zudem wird der Fingerschutz verbessert, in dem die Querfuge durch die stegartig vorstehende Nutseitenwand überbrückt wird und nur von einer Seite in eine elektrische Leiter tragende Nut eingegriffen wird.

Denkbar ist aber auch, dass die Nutseitenwände einer Nut an einer Stirnseite paarweise vorspringen. Diese aus den beiden Nutseitenwänden und den zwischenliegenden Nuten bestehende Nutanordnung ist dann relativ zu der benachbarten Nutanordnungen und damit relativ zu den Nutseitenwänden der benachbarten Nut an dieser Stirnseite länger. Damit bildet eine Nutanordnung einen Vorsprung, die in eine rückspringende Nutanordnung des angrenzenden Profilelementes eintaucht.

Das Profilelement kann an den Stirnseiten mit einer Bodenplatte enden. Die den Vorsprung bildenden Nutseitenwände können dabei von der Bodenplatte in Längserstreckungsrichtung des Profilelementes hervorstehen. Sie ragen somit über die endseitige Stirnkante der Bodenplatte hinaus. Denkbar ist aber auch, dass die den Rücksprung bildenden Nutseitenwände in Längserstreckungsrichtung vor der Bodenplatte enden, d. h. die endseitige Stirnkante der Bodenplatte ragt über die den Rücksprung bildende Nutseitenwände hinaus. Die Stirnkante der Bodenplatte kann aber auch die Stirnseite eines Profilelementes definieren, wobei an einer Stirnseite vorzugsweise alternierend über die Stirnkante der Bodenplatte herausragende Vorsprünge und Rücksprünge mit vor der Stirnkante der Bodenplatte endenden Nutseitenwänden vorhanden sind.

Mit einer solchen Bodenplatte werden eine Führung und ein Auflager bereitgestellt, wenn die vorspringenden Nutseitenwände in den korrespondierenden Rücksprung eines angrenzenden Profilelementes eintauchen. Die ineinander greifenden, hintereinander angeordneten Profilelemente werden durch die jeweilige Bodenplatte somit auf einer Ebene (horizontal) ausgerichtet.

Die Erfindung wird nachfolgend anhand von Ausführungsbeispielen mit den beigefügten Zeichnungen näher erläutert. Es zeigen:
- Figur 1: - Perspektivische Explosionsansicht einer Stromführungsanordnung mit zwei Stromführungsprofilen und elektrischen Leitern;
- Figur 2: - perspektivische Ansicht der Stromführungsanordnung aus Figur 1 im Vorsteckzustand mit eingesetzten elektrischen Leitern;
- Figur 3: - Stromführungsanordnung aus Figur 2 mit zusammengeschobenen Stromführungsprofilen;
- Figur 4: - perspektivische Ansicht der Stromführungsanordnung aus Figur 1 mit Blick schräg nach rechts;
- Figur 5: - Stromführungsanordnung aus Figur 4 im Vorsteckzustand;
- Figur 6: - Stromführungsanordnung aus Figur 5 im zusammengesteckten Zustand;
- Figur 7: - Draufsicht auf die Stromführungsanordnung im Vorsteckzustand;
- Figur 8: - Draufsicht auf die Stromführungsanordnung aus Figur 7 mit eingesetzten elektrischen Leitern;
- Figur 9: - Draufsicht auf die Stromführungsanordnung aus Figur 3;
- Figur 10: - Draufsicht auf die Stromführungsanordnung aus Figur 9 mit vergrößertem Abstand durch Längenversatz;
- Figur 11: - Draufsicht auf die Stromführungsanordnung aus Figur 9 mit reduziertem Abstand durch Längenversatz;
- Figur 12: - perspektivische Explosionsansicht einer zweiten Ausführungsform einer Stromführungsanordnung;
- Figur 13: - perspektivische Ansicht der Stromführungsanordnung aus Figur 12 mit eingesetzten elektrischen Leitern im Vorsteckzustand;
- Figur 14: - perspektivische Ansicht der Stromführungsanordnung aus Figur 13 im zusammengesteckten Zustand;
- Figur 15: - perspektivische Explosionsansicht der Stromführungsanordnung aus Figur 12 mit Blick schräg nach rechts;
- Figur 16: - perspektivische Ansicht der Stromführungsanordnung aus Figur 15 im Vorsteckzustand;
- Figur 17: - Draufsicht auf die Stromführungsanordnung aus Figur 16 ohne eingelegte elektrische Leiter;
- Figur 18: - Draufsicht auf die Stromführungsanordnung aus Figur 16 mit eingesetzten elektrischen Leitern;
- Figur 19: - Draufsicht auf die Stromführungsanordnung aus Figur 18 im zusammengesteckten Zustand;
- Figur 20: - Draufsicht auf die Stromführungsanordnung aus Figur 19 mit vergrößertem Abstand durch Längenausgleich;
- Figur 21: - Draufsicht auf die Stromführungsanordnung aus Figur 19 mit verringertem Abstand durch Längenausgleich.

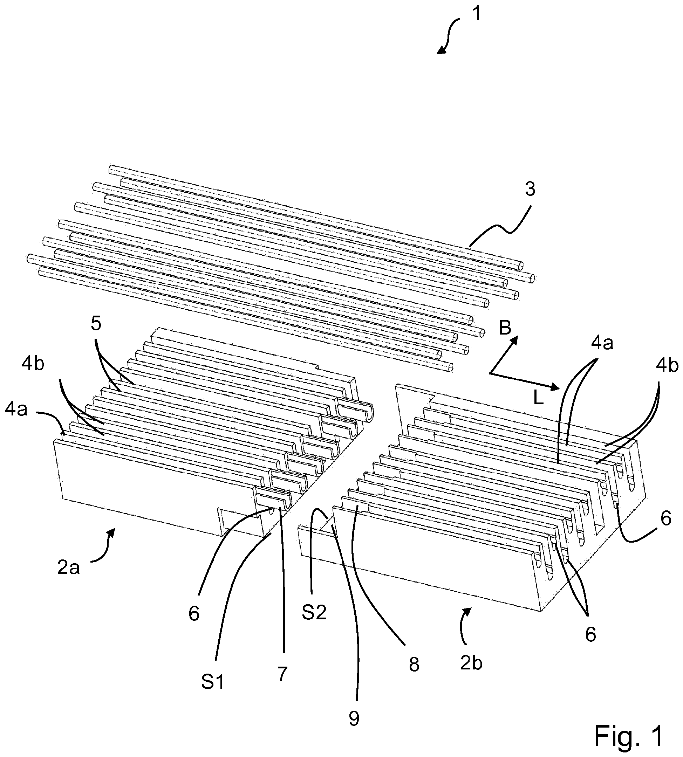

Figur 1 zeigt eine perspektivische Explosionsansicht einer Stromführungsanordnung 1 mit zwei elektrisch isolierenden Profilelementen 2a, 2b. Diese Profilelemente 2a, 2b sind längenreduziert dargestellt, indem sie entlang ihrer Längserstreckungsrichtung L abgeschnitten sind. Die Profilelemente 2a, 2b haben entsprechend der Anzahl aufzunehmender elektrischer Leiter eine Anzahl von Nuten 4. Jede Nut ist durch ein Paar von Nutseitenwänden 5 begrenzt, die sich in Längserstreckungsrichtung L des jeweiligen Profilelementes 2a, 2b erstrecken und in einer Breitenrichtung B parallel nebeneinander angeordnet sind. Weiterhin ist jede Nut 4 am Boden durch einen Nutgrund 6 begrenzt, der aus dem Isolierstoffmaterial des Profilelementes 2a, 2b gebildet ist. Die Nuten 4 sind an der dem jeweiligen Nutgrund 6 gegenüberliegenden Seite offen und bilden auf diese Weise Schächte, in die die elektrischen Leiter 3 eingelegt werden.

Deutlich wird, dass die Nuten 4 alternierend höhenversetzt sind. Die unmittelbar nebeneinander liegenden Nuten 4 haben somit eine unterschiedliche Tiefe von der offenen Kontaktierungsseite bzw. von der dargestellten Oberseite zum Nutgrund 6 gesehen. Hierbei spannt eine erste Gruppe von Nuten 4a mit ihrem Nutgrund 6 eine erste Ebene E1 auf. Eine zweite Gruppe von Nuten 4b, die jeweils zwischen zwei Nuten 4a der ersten Gruppe angeordnet sind und eine größere Nuttiefe als die Nuten 4a haben, spannen mit ihrem Nutgrund 6 eine zweite Ebene E2 auf, wobei die erste und zweite Ebene E1, E2 höhenversetzt zueinander angeordnet sind. Die erste Ebene E1 ist dabei näher zu der Kontaktierungsseite bzw. Oberseite des Profilelementes 2a, 2b angeordnet, als die zweite Ebene E2. Die beiden Ebenen E1, E2 sind vorzugsweise parallel zueinander ausgerichtet.

Deutlich wird, dass in dem dargestellten Ausführungsbeispiel zwei nebeneinander liegende Nuten 4 eine gemeinsame Nutseitenwand 5 haben.

Deutlich wird, dass die Profilelemente 2a, 2b an ihrer nicht geschnittenen Stirnseite S1 rinnenartige Vorsprünge 7 haben. Diese Vorsprünge 7 werden aus einer Verlängerung der einander gegenüberliegenden Nutseitenwände 5 und dem Nutgrund gebildet. In dem dargestellten Ausführungsbeispiel sind die rinnenartigen Vorsprünge einer mit im Vergleich zu den Nutseitenwänden geringeren Höhe ausgeführt. Diese Vorsprünge 7 sind ausgebildet, um in korrespondierende Rücksprünge 8 an der benachbarten Stirnseite S2 des neben dem ersten Profilelement 2a in eine fluchtende Längserstreckungsrichtung L angeordneten zweiten Profilelementes 2b einzutauchen.

In dem dargestellten Ausführungsbeispiel sind Vorsprünge 7 und korrespondierende Rücksprünge 8 nur an den Nuten 4a innerhalb der Ebene E1 mit geringer Nuttiefe, als die alternierend zwischen diesen Nuten 4a liegenden Nuten 4b innerhalb der Ebene E2 mit von der Kontaktierungsseite her tiefer liegendem Nutgrund 6 vorgesehen.

Deutlich wird, dass die Vorsprünge 7 über die Länge der daneben liegenden Nuten 4b und der Länge des Isolierstoffgehäuses des Profilelementes 2a herausragen.

Erkennbar ist weiterhin, dass die Rücksprünge 8 zur Stirnseite S2 des Profilelementes 2b hin vor dieser Stirnseite S2, d.h. vor dem stirnseitigen Ende (= Stirnkante) einer Bodenplatte 9 des Profilelementes 2b enden. Die mit dem Rücksprung 8 versehenden Nuten sind damit kürzer oder im Bereich des Rücksprungs 8 aufgeweitet, um die Nut 4a durch den korrespondierenden Vorsprung 7 fortzusetzen oder einen solchen Vorsprung 7 in dem Rücksprung 8 aufzunehmen.

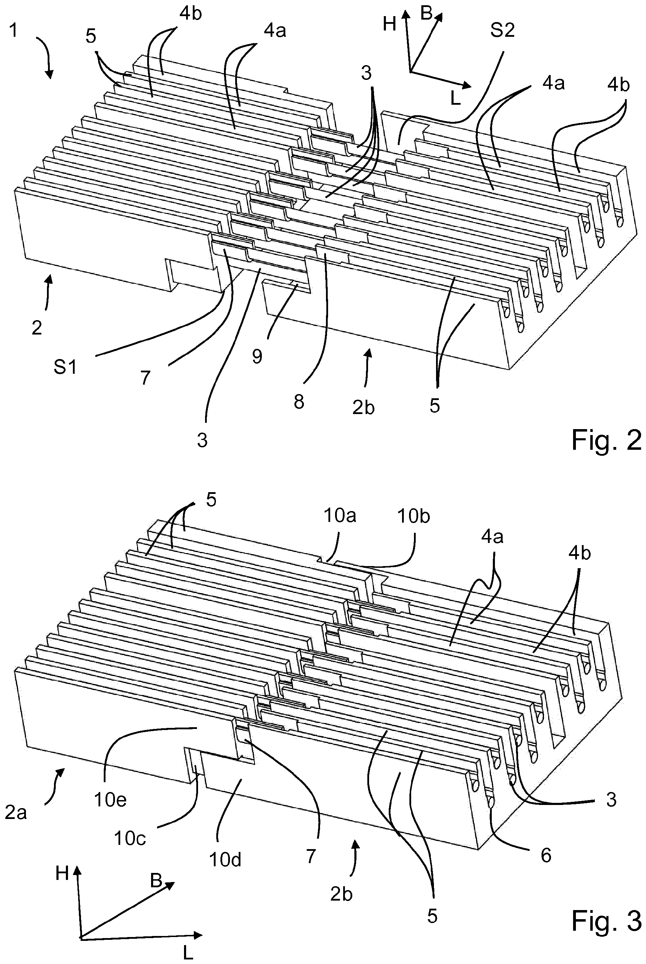

Figur 2 zeigt eine perspektivische Ansicht des Stromführungsprofils 1 aus Figur 1 mit nunmehr eingelegten elektrischen Leitern 3. Deutlich wird, dass die elektrischen Leiter 3 als elektrisch leitende Stabelemente in die Nuten 4a, 4b eingelegt und dort optional verriegelt und damit vor Herausfallen geschützt sind. Die elektrischen Leiter 3 erstrecken sich dabei über mindestens zwei in Längserstreckungsrichtung L in einer Flucht nebeneinander angeordneten Profilelementen 2a, 2b. Die beiden Profilelemente 2a, 2b sind dabei immer noch so weit voneinander beabstandet, dass die Vorsprünge 7 von den Rücksprüngen 8 beabstandet sind.

Deutlich wird auch, dass die in die tieferen Nuten 4b eingelegten elektrischen Leiter 3 eine tiefer liegende Ebene E2 aufspannen, die von der Ebene E1 der in die Nuten 4a mit geringerer Nuttiefe eingelegten elektrischen Leiter in Richtung der Höhe der Nuten 4a, 4b beabstandet ist. Dadurch wird eine ausreichende Luft- und Kriechstrecke sichergestellt, auch wenn diese unteren elektrischen Leiter 3 nicht in Vorsprüngen 7 geführt werden.

Figur 3 lässt eine Darstellung des Stromführungsprofils 1 in dem nunmehr zusammengesteckten Zustand erkennen. Hierbei wird deutlich, dass nunmehr die Vorsprünge 7 teilweise in die korrespondierenden Rücksprünge 8 eintauchen, um auf diese Weise die Nuten 4a mit geringerer Nuttiefe fortzuführen. Durch diese Vorsprünge 7 und deren Eintauchen in die Rücksprünge 8 werden die Luft- und Kriechstrecken insbesondere zu den tiefer liegenden, benachbarten elektrischen Leiter 3 in den tieferen Nuten 4b hinreichend vergrößert im Vergleich zu der freien Anordnung der elektrischen Leiter 3 in einem Luftspalt ohne Führung.

Deutlich wird, dass die Profilelemente 2a, 2b passend in Längserstreckungsrichtung L angeordnet sind. Hierzu sind einander überlappende Seitenwandabschnitte 10a, 10b bzw. 10c, 10d vorhanden. Es können auch Höhenrichtung H aneinander angrenzende Seitenwandabschnitte 10d, 10e vorhanden sein, die im Steckzustand lotrecht zur Auflagerebene der Profilelemente 2a, 2b, d.h. in Höhenrichtung H übereinander positioniert sind.

Die Profilelemente 2a, 2b können an ihren diametral einander gegenüberliegenden Stirnseiten S1, S2 unterschiedlich so ausgebildet sein, so dass auf einer Stirnseite S1 beispielsweise Vorsprünge 7 und auf der diametral gegenüberliegenden Stirnseite S2 Rücksprünge 8 vorhanden sind. Auf diese Weise kann ein Profilelement 2b mit seiner ersten Stirnseite S1 an die zweite Stirnseite S2 eines identischen Profilelementes 2b angesetzt werden.

Eine Nut 4a hat dann diametral gegenüberliegend zu einem Vorsprung 7 auf einer Stirnseite S1 des Profilelementes 2a, 2b einen Rücksprung 8 an der diametral gegenüberliegenden Stirnseite S2 desselben Profilelementes 2a, 2b.

Denkbar ist aber auch, dass ein Profilelement 2a, 2b an einer Stirnseite S1, S2 alternierend Vorsprünge 7 und Rücksprünge 8 bei den nebeneinander liegenden Nuten hat. Dies ist insbesondere vorteilhaft, wenn die nebeneinander liegenden Nuten 4a, 4b nicht höhenversetzt sind, sondern dieselbe Nuttiefe aufweisen.

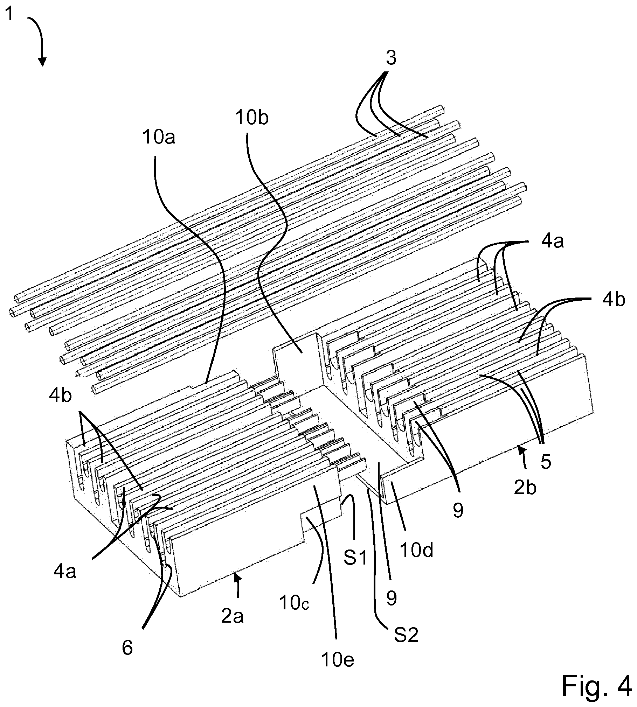

Figur 4 zeigt eine perspektivische Ansicht des Stromführungsprofils 1 mit Blick schräg nach rechts. Auch hier sind zwei Profilelemente 2a, 2b in Längserstreckungsrichtung L der Profilelemente 2a, 2b nebeneinander in einer Flucht angeordnet. Die Profilelemente 2a, 2b haben wiederum zwei Gruppen von Nuten 4a, 4b unterschiedlicher Tiefe, wobei die nebeneinander liegenden Nuten 4a, 4b jeweils höhenversetzt zueinander angeordnet sind.

Für die flachere Gruppe von Nuten 4a, 4b sind wiederum Vorsprünge 7 vorgesehen, die rinnenförmig als Verlängerung der einander gegenüberliegenden Nutseitenwände 5 und dem Nutgrund 6 ausgebildet sind. An der gegenüberliegenden Stirnseite S2 des benachbarten Profilelementes 2b haben diese Nuten 4a mit geringerer Nuttiefe Rücksprünge 8. Diese Rücksprünge 8 sind durch Vergrößerung der Weite der Nuten 4a bzw. einer Vergrößerung des Abstandes der Nutseitenwände 5 gebildet, wobei die Nutseitenwände 5 immer noch stehen gelassen sind. Die Nuten 4a, 4b des zweiten Profilelementes 2b enden an der dem ersten Profilelement 2a gegenüberliegenden Stirnseite S2, wobei an der der Kontaktierungsseite gegenüberliegenden Unterseite des Profilelementes 2b eine Bodenplatte 9 gegenüber dem stirnseitigen Ende des Profilelementes 2b und seiner Nutseitenwände 5 vorsteht.

Deutlich wird, dass die benachbarten Nuten 4a, 4b jeweils sich eine Nutenseitenwand 5 teilen, welche die beiden Nuten 4a, 4b voneinander trennt, auch wenn benachbarte Nuten jeweils zusätzlich hierzu höhenversetzt zueinander sind.

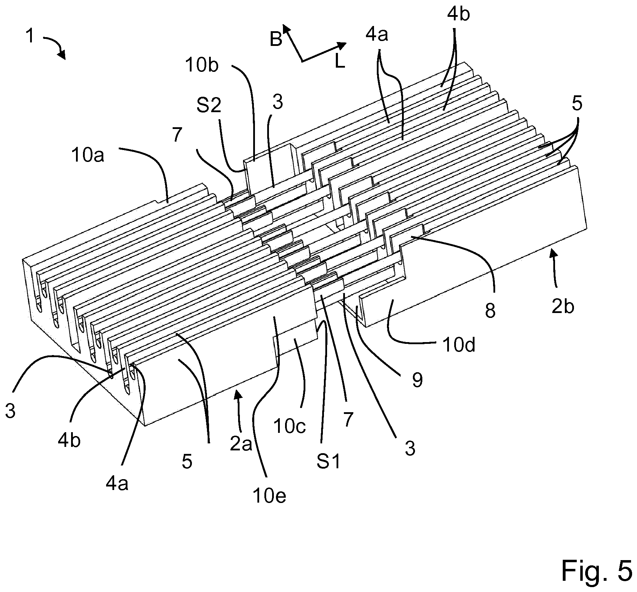

Figur 5 zeigt das Stromführungsprofil in der perspektivischen Ansicht mit nunmehr eingesetzten elektrischen Leitern 3 im Vorsteckzustand.

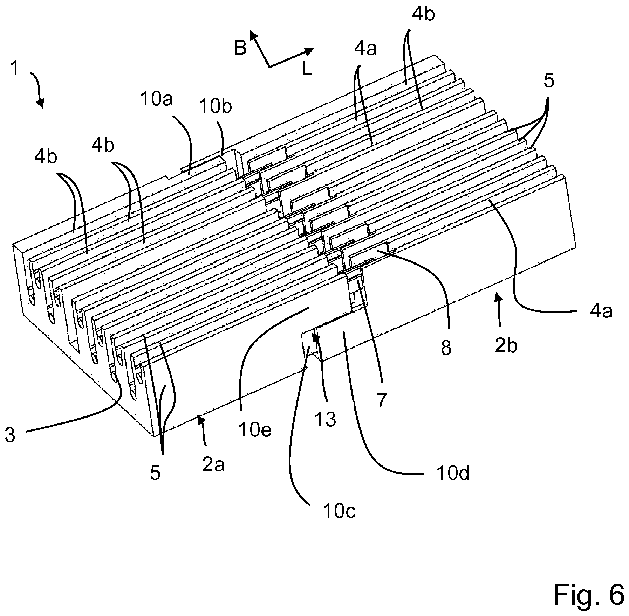

Figur 6 zeigt das Stromführungsprofil 1 aus Figur 5 nunmehr im zusammengesteckten Zustand. Dabei tauchen die rinnenartigen Vorsprünge 7 teilweise in die Rücksprünge 8 der zugeordneten Nuten 4a des angrenzenden Profilelementes 2b ein. Die Seitenwandabschnitte 10b, 10d, die von der vorstehenden Bodenplatte 9 des zweiten Profilelementes 2b abragen überlappen sich dabei mit den in Breitenrichtung etwas zurückgesetzten Seitenwandabschnitten 10a, 10c des ersten Profilelementes 2a. Damit werden die beiden Profilelemente 2a, 2b in ihrer Position und Lage fluchtend zueinander ausgerichtet und gehalten. Die Bodenplatte 9 des Profilelementes 2b untergreift dabei das gegenüberliegende Profilelement 2a, in dem die Bodenplatte 9 in eine stirnseitige Ausnehmung 13 an der von der Kontaktierungsseite abgewandten Unterseite eingreift. Deutlich wird, dass die elektrischen Leiter 3 der ersten Gruppe, die in den flacheren Nuten 4a aufgenommen sind, nunmehr von der Seite und von unten unzugänglich in den rinnenartigen Vorsprüngen im Bereich des Spalts zwischen den Profilelementen 2a, 2b aufgenommen werden. Die darunter liegenden elektrischen Leiter 3 der in der zweiten, tieferen Gruppe von Nuten 4b werden hingegen vor Berührung durch die Seitenwandabschnitte 10b, 10d geschützt. Die Luft- und Kriechstrecken zwischen diesen benachbarten elektrischen Leitern 3 sind durch die in den Rücksprüngen 8 aufgenommenen Vorsprünge 7 hinreichend groß.

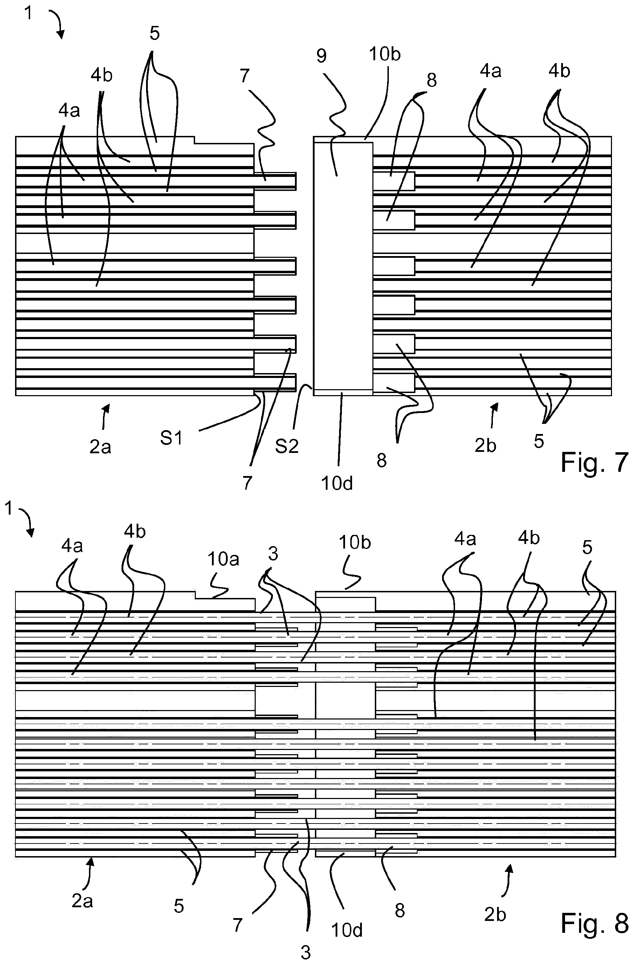

Figur 7 zeigt eine Draufsicht auf die Stromführungsanordnung 1 aus den Figuren 1-6 mit voneinander beabstandeten Profilelementen 2a, 2b ohne elektrischen Leiter. Deutlich wird, dass die elektrisch isolierenden Profilelemente 2a, 2b, die beispielsweise aus einem Kunststoffmaterial ausgebildet sind, sich parallel nebeneinander in eine Längserstreckungsrichtung L des Profilelementes 2a, 2b erstreckenden Nuten 4a, 4b haben. Deutlich wird, dass die benachbarten Nuten 4a, 4b jeweils durch eine Nutenseitenwand 5 voneinander getrennt sind.

Eine erste Gruppe von Nuten 4a ist durch die rinnenartigen Vorsprünge 7 verlängert. Eine zweite Gruppe von tieferen Nuten 4b hat keine solchen Vorsprünge. Die Nuten 4a, 4b der ersten und zweiten Gruppe wechseln sich in Breitenrichtung B alternierend ab, so dass jede zweite Nut 4a einen Vorsprung 7 hat.

Erkennbar ist auch, dass an einer dem ersten Profilelement 2a gegenüberliegenden Stirnseite S2 des zweiten Profilelementes 2b die Nuten 4a mit geringerer Nuttiefe der ersten Gruppe in einem Rücksprung derart enden, dass die Breite oder Weite in dem Rücksprung 8 im Vergleich zur angrenzenden Nutbreite derselben Nut 4a und im Vergleich zum benachbarten Abschnitt der daneben liegenden Nut 4b der zweiten Gruppe vergrößert und zum Aufnehmen des rinnenartigen Vorsprungs 7 angepasst ist.

In dem dargestellten Ausführungsbeispiel enden sämtliche Nuten 4a, 4b vor einer Bodenplatte 9 des Profilelementes 2a, die als Auflager für das benachbarte Profilelement 2a dient. Von dieser Bodenplatte 9 ragen die Seitenwandabschnitte 10b, 10d ab. Figur 8 zeigt die Stromführungsanordnung 1 aus Figur 7 mit nunmehr eingelegten elektrischen Leitern in der Draufsicht. Deutlich wird, dass die elektrischen Leiter 3 jeweils in miteinander fluchtenden Nuten 4a bzw. 4b der hintereinander angeordneten Profilelemente 2a, 2b eingesetzt sind. Die benachbarten elektrischen Leiter 3 sind dabei nicht nur durch den Höhenversatz ausreichend voneinander beabstandet. Vielmehr sorgen die Vorsprünge 7 in Verbindung mit den Rücksprüngen 8 dafür, dass die Luft- und Kriechstrecken zwischen den benachbarten elektrischen Leitern 3 hinreichend groß sind.

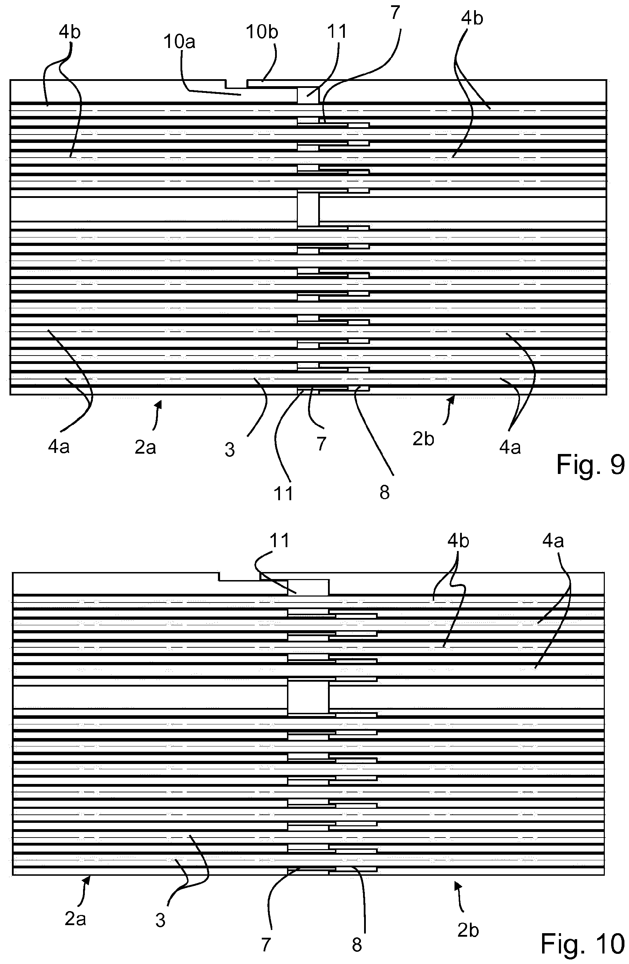

Dies ist in der Draufsicht der Stromführungsanordnung 1 in Figur 9 im zusammengesteckten Zustand erkennbar. Deutlich wird, dass die beiden nebeneinander angeordneten Profilelemente 2a, 2b immer noch durch einen Spalt 11 voneinander beabstandet sind. Dennoch sind die elektrischen Leiter 3 der ersten Gruppe in den flacheren Nuten 4a im Bereich des Spalts durch die rinnenförmigen Vorsprünge 7 und die entsprechend rinnenartigen Vorsprünge 8 seitlich und nach unten hin umgegeben.

Deutlich wird zudem, dass die elektrischen Leiter 3 über ihre Gesamte Länge von oben durch die Öffnung der Nuten 4a 4b zugänglich sind, so dass ein Abgriffkontakt durch Aufstecken eines Abgriff-Steckverbinders möglich ist.

Wenn sich die Profilelemente 2a, 2b durch Kälteeinwirkung zusammenziehen, wie in der Figur 10 wiedergegeben, dann wird der Spalt 11 zwischen den Profilelementen vergrößert (im Vergleich zu der Darstellung in Figur 9). Innerhalb einer Toleranzgrenze sind die rinnenförmigen Vorsprünge 7 dabei immer noch teilweise in dem Rücksprung 8 aufgenommen, so dass die in den rinnenförmigen Vorsprüngen 7 aufgenommenen elektrischen Leiter gegenüber den benachbarten elektrischen Leitern hinreichend elektrisch isoliert sind.

Die den Spalt 11 überbrückenden Vorsprünge 7 gewährleisten dabei auch einen sicheren Fingerschutz vor unbeabsichtigtem Berühren der Leiter 3 im Bereich des Spaltes 11. Dies gilt sowohl für die Leiter 3 der der Kontaktierungsseite zugewandten ersten Ebenen E1, welche in den Vorsprüngen 7 aufgenommen sind, als auch für die Leiter 3, welche sich freiliegend im Spalt 11 innerhalb der der Kontaktierungsseite abgewandten unteren Ebene E2 befinden, da der Abstand der Vorsprünge 7 in Breitenrichtung derart gering ist, dass ein Berühren dieser Leiter verhindert wird.

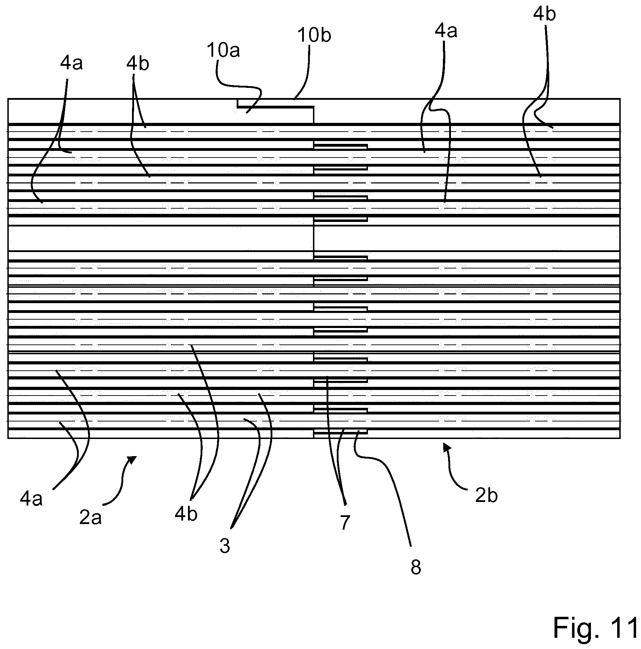

In der Draufsicht aus Figur 11 ist erkennbar, dass sich die Profilelemente 2a, 2b durch Wärmeeinfluss weiter ausgedehnt haben. Der Spalt zwischen den aneinander angrenzenden Stirnseiten S1, S2 der beiden Profilelemente 2a, 2b ist dabei weiter verringert und wie dargestellt nahezu vollständig aufgehoben. Dabei tauchen die rinnenförmigen Vorsprünge 7 nunmehr fast vollständig in die zugeordneten Rücksprünge des benachbarten Profilelementes 2b ein.

Die Führung der Vorsprünge 7 in den Rücksprüngen 8 ermöglicht es somit, die nebeneinander angeordneten Profilelemente 2a, 2b um einen Spalt 11 voneinander beabstandet anzuordnen, um somit für die Ausdehnung innerhalb eines Toleranzmaßes einen Längenausgleich zu ermöglichen.

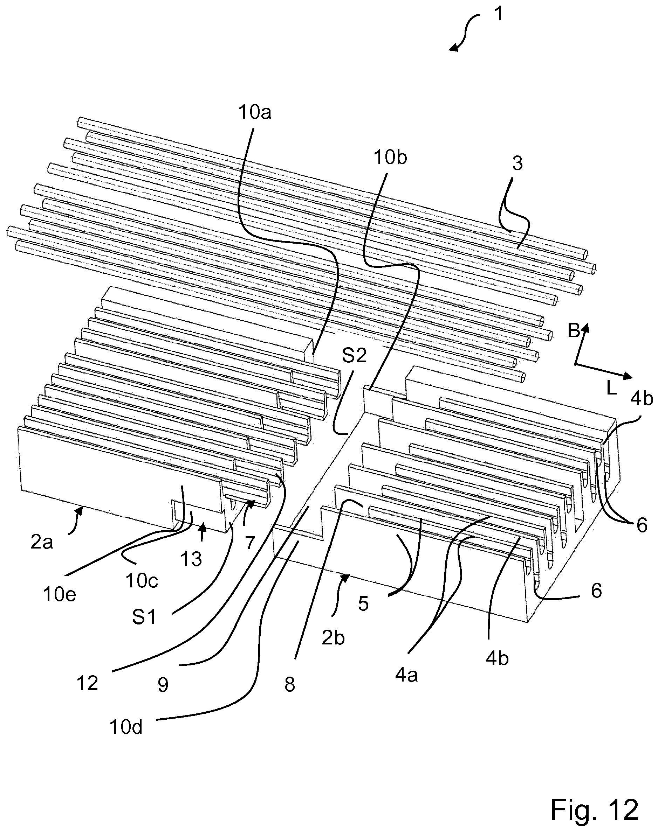

Figur 12 zeigt eine perspektivische Explosionsansicht einer zweiten Ausführungsform einer Stromführungsanordnung 1. Auch hier sind mehrere Profilelemente 2a, 2b in Längserstreckungsrichtung L in einer Flucht hintereinander angeordnet. Diese beiden Profilelemente 2a, 2b sind wiederum längenverkürzt dargestellt. Um eine nahezu unendliche Folge von Profilelementen 2a, 2b hintereinander anzuordnen haben die Profilelemente 2a, 2b auf einer Stirnseite eine Ausgestaltung, wie an der rechten, dem zweiten Profilelement 2b gegenüberliegenden Stirnseite S1 des ersten Profilelementes 2a gezeigt und auf der diametral gegenüberliegende Stirnseite eine Ausführung, wie sie auf der linken, dem ersten Profilelement 2a gegenüberliegenden Stirnseite S2 des zweiten Profilelementes 2b gezeigt ist.

Bei dieser Ausführungsform sind die Vorsprünge 7 aus einer Verlängerung einer Nutseitenwand 5 gebildet. Die andere Nutseitenwand derselben Nut 4a, 4b ist im Vergleich zu dem Vorsprung 7 verkürzt und endet an der Stirnseite des Hauptkörpers des Profilelementes 2a.

Die gegenüberliegende Stirnseite S2 des anderen Profilelementes 2b hat verkürzte Nutseitenwände 5 zur Bildung der Rücksprünge. Hier ist alternierend jede zweite Nutseitenwand 5 zur Bildung eines Rücksprungs 8 verkürzt. Die benachbarten Nuten 4a, 4b teilen sich dabei eine gemeinsame Seitenwand 5.

Wiederum sind in dem dargestellten Ausführungsbeispiel flachere Nuten 4a und tiefere Nuten 4b vorgesehen. Die flacheren und tieferen Nuten 4a, 4b wechseln sich alternierend ab, und spannen zwei höhenversetzt zueinander ausgerichtete Ebenen mit ihrem jeweiligen Nutgrund 6 auf.

Im Übrigen kann für die Ausgestaltung der Profilelemente 2a, 2b mit einer Bodenplatte 9 an einer Stirnseite S2 des zweiten Profilelementes 2b und Seitenwandabschnitten 10a, 10b, 10c, 10d, 10e auf das vorher beschriebene Ausführungsbeispiel verwiesen werden.

In der Darstellung ist weiterhin erkennbar, dass die Nutseitenwände 5 sich in Längserstreckung L erstreckende Rippen 12 hat. Diese Rippen dienen dazu, die elektrischen Leiter 3 einzuklipsen und zur Verriegelung und damit vor Herausfallen zu schützen. Dennoch sind die elektrisch isolierenden Profilelemente 2a, 2b relativ zu den eingelegten elektrischen Leitern in Längserstreckungsrichtung L verschiebbar.

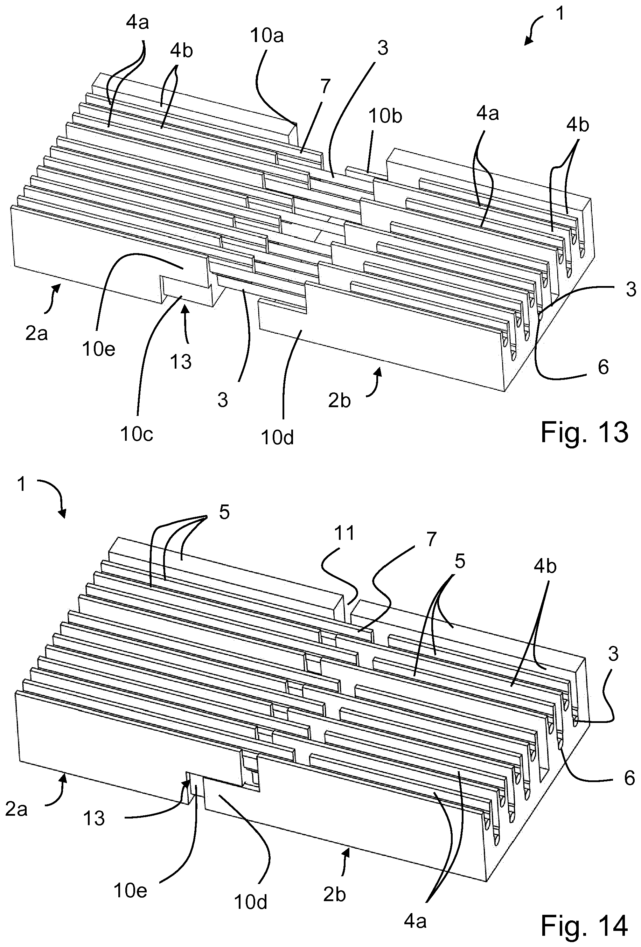

Figur 13 lässt eine perspektivische Ansicht der Stromführungsanordnung 1 im zusammengebauten Zustand in der Vorraststellung erkennen. Deutlich wird, dass die Vorsprünge 7 eine Seitenwand für den in die flacheren Nuten 4a eingelegten elektrischen Leiter 3 bilden. Weiterhin untergreifen die Vorsprünge 7 die eingelegten elektrischen Leiter an der Unterseite teilweise und bilden dann zumindest einen Teil eines Nutgrundes 6, um den elektrischen Leiter 3 teilweise von dem benachbarten elektrischen Leiter 3 zu isolieren.

Figur 14 zeigt die Stromführungsanordnung 1 aus Figur 13 im nunmehr zusammengesteckten Zustand mit einem Sollspalt 11, der einen weiteren Toleranzausgleich bei Längenausdehnung der Profilelemente 2a, 2b sicherstellt. Erkennbar ist, dass die durch die verlängerten Nutseitenwände 5 gebildeten Vorsprünge 7 nunmehr in den Freiraum des angrenzenden Profilelementes 2b eintauchen und in der Flucht zur benachbarten Nutseitenwand 5 stehen. Zwischen dem Vorsprung 7 und der Stirnkante der sich in der Flucht befindlichen Nutseitenwand 5 ist ebenso ein Spalt vorhanden. Die Luft- und Kriechstrecke zum benachbarten elektrischen Leiter ist allerdings noch ausreichend groß, da dieser höhenversetzt in einer tiefer liegenden Nut 4b aufgenommen ist. Zudem wird ein seitlicher Berührungsschutz der elektrischen Leiter 3 erreicht, da die Nutseitenwände den in Blickrichtung vorderen, äußeren elektrischen Leiter 3 abdecken. Der auf der anderen gegenüberliegenden Seite an der Seitenwand benachbarte elektrische Leiter 3 ist hingegen tiefer gelegt und durch den Seitenwandabschnitt 10b des Profilelementes 2b vor Berührung von außen geschützt. Auf diese Weise ist der notwendige Fingerschutz gewährleitet.

Die den Spalt 11 überbrückenden Vorsprünge 7 gewährleisten auch hier einen sicheren Fingerschutz vor unbeabsichtigtem Berühren der Leiter 3 im Bereich des Spaltes 11. Dies gilt sowohl für die Leiter 3 der der Kontaktierungsseite zugewandten ersten Ebenen E1, welche in den Vorsprüngen 7 aufgenommen sind, als auch für die Leiter 3, welche sich freiliegend im Spalt 11 innerhalb der der Kontaktierungsseite abgewandten unteren Ebene E2 befinden, da der Abstand der Vorsprünge 7 in Breitenrichtung B derart gering ist, dass ein Berühren dieser Leiter 3 verhindert wird.

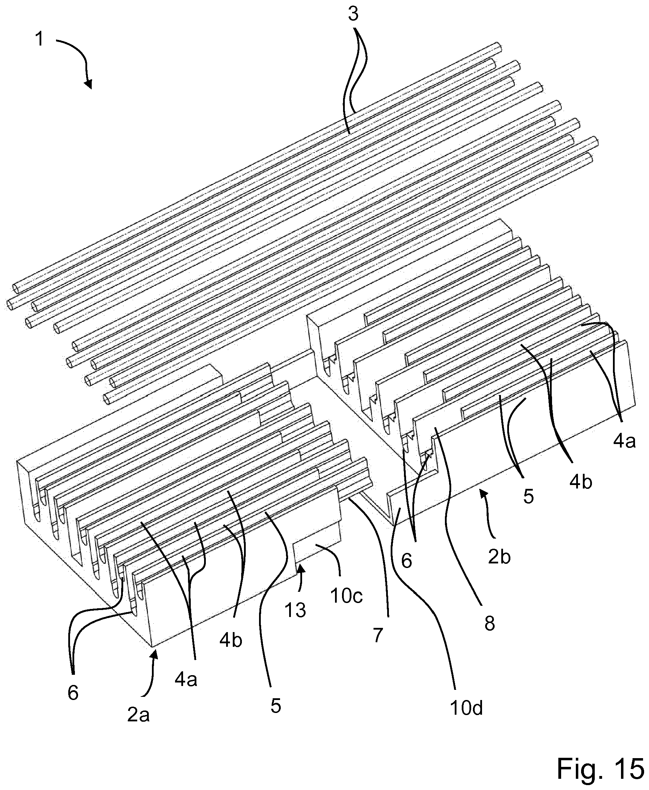

Figur 15 zeigt eine perspektivische Explosionsansicht der Stromführungsanordnung 1 aus Figur 12 mit Blick nach rechts. Hier wird deutlich, dass die Rücksprünge 8 durch eine Verkürzung der jeweiligen Seitenwände 5 erreicht werden. Erkennbar ist auch, dass die Vorsprünge 7 nicht nur aus der Verlängerung der Nutseitenwände 5 gebildet sind, sondern auch aus einem Fortsatz eines Teils des Nutgrundes 6. Ein in den Rücksprung 8 eintauchender Vorsprung 7 ergänzt auf diese Weise den im Rücksprung 8 entsprechend fehlenden Fortsatz der Nutseitenwand 5 des benachbarten Profilelementes 2b.

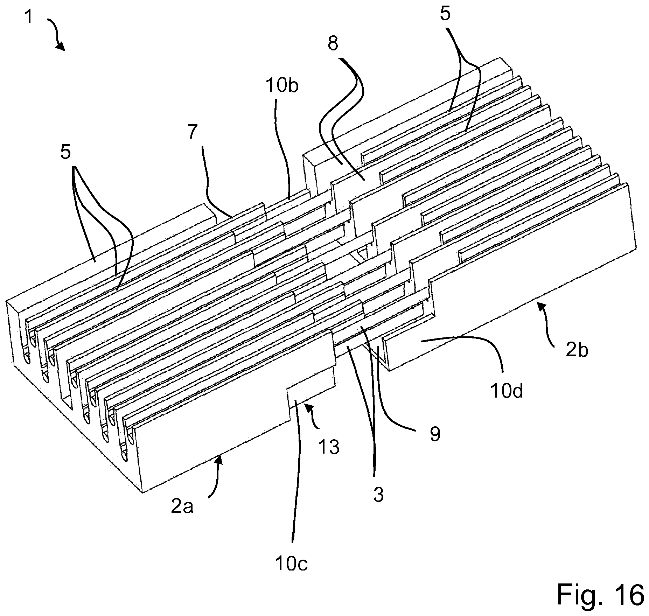

Figur 16 zeigt die perspektivische Ansicht der Stromführungsanordnung 1 aus Figur 15 im zusammengebauten Zustand. Erkennbar ist dabei, dass jede zweite Nutseitenwand 5 des zweiten Profilelementes 2b zur Bildung des Rücksprungs 8 verkürzt ist.

In entsprechender Weise ist jede zweite Nutseitenwand 5 des ersten Profilelementes 2a zur Bildung des Vorsprungs 7 verlängert.

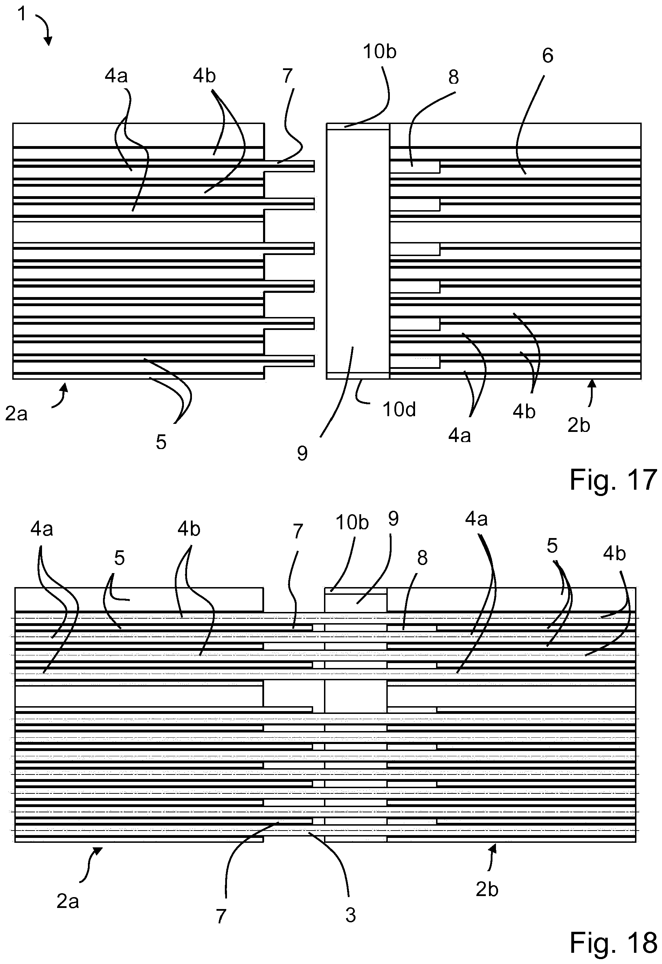

Dies wird aus der Draufsicht auf die Stromführungsanordnung 1 in Figur 17 noch deutlicher. Erkennbar ist, dass im Vergleich zur ersten Ausführungsform die Baubreite dadurch verringert wird, dass eine Nutseitenwand 5 gleichermaßen für zwei benachbarte Nuten 4a, 4b genutzt und im Bereich des Vorsprungs 7 und des entsprechenden Rücksprungs 8 nur die Wandstärke dieser Nutseitenwand 5 zusammen mit dem Teil des Nutgrundes genutzt wird.

In der Draufsicht aus Figur 18 mit eingebauten elektrischen Leitern 3 wird deutlich, dass die benachbarten elektrischen Leiter 3 durch die Nutseitenwand 5 und den Vorsprung 7 als Verlängerung einer Nutseitenwand voneinander getrennt sind. Im Übrigen werden die Luft- und Kriechstrecken durch den Höhenversatz sichergestellt.

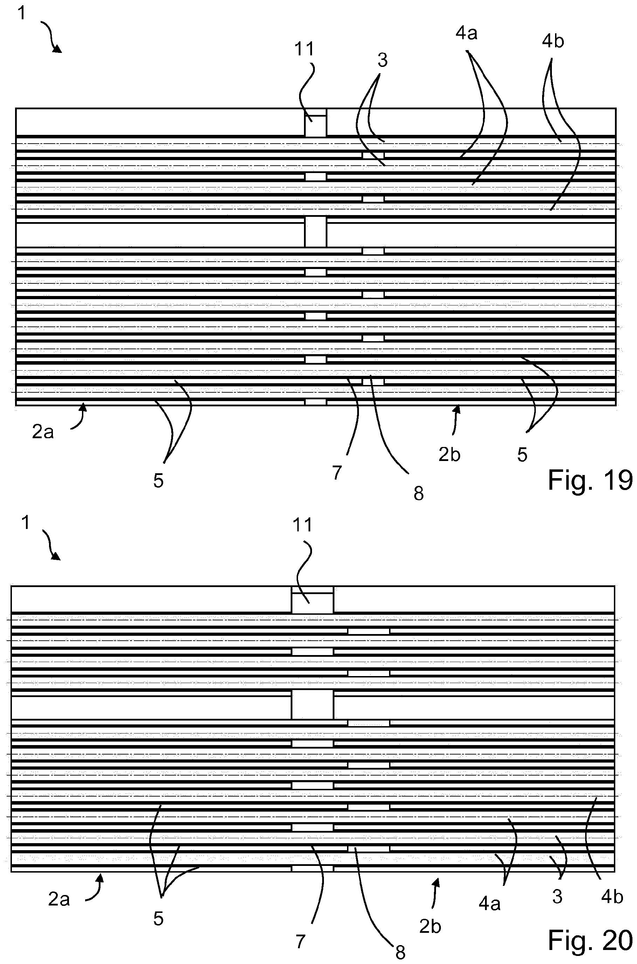

Figur 19 zeigt die Draufsicht auf die Stromführungsanordnung 1 aus den Figuren 12-18 im nunmehr zusammengesteckten Zustand. Hierbei sind die beiden Profilelemente 2a, 2b wiederum um einen Spalt 11 voneinander beabstandet. Die Vorsprünge 7 in Form der Verlängerung der Nutseitenwände 5 tauchen dabei stirnseitig in den Rücksprung 8 des benachbarten Profilelementes 2b ein und dienen somit quasi als Verlängerung der folgenden Nutseitenwand, auch wenn zwischen dieser Nutseitenwand 5 des zweiten Profilelementes 2b und dem Vorsprung 7 ein Spalt ist. Durch den Höhenversatz der benachbarten elektrischen Leiter, d.h. durch die alternierend höhenversetzte Anordnung der elektrischen Leiter in den Nuten 4a, 4b, wird die Einhaltung der Luft- und Kriechstrecken sichergestellt.

Figur 20 zeigt eine Draufsicht auf die Stromführungsanordnung 1 aus Figur 19. Dabei sind die Längen der Profilelemente 6 durch Abkühlung im Vergleich zur Ausführungsform aus Figur 19 geschrumpft, wodurch sich die Spaltbreite des Spaltes 11 vergrößert. Die Vorsprünge 7 überlappen dabei immer noch das angrenzende Profilelement 2b und erstrecken sich über das Ende der Nuten 4a, 4b und greifen die Vorsprünge 7 und die alternierend in dem Zwischenraum zwischen den benachbarten nicht-verkürzten Seitenwänden 5 kammartig ein, um so eine ausreichende Überlappung sicherzustellen.

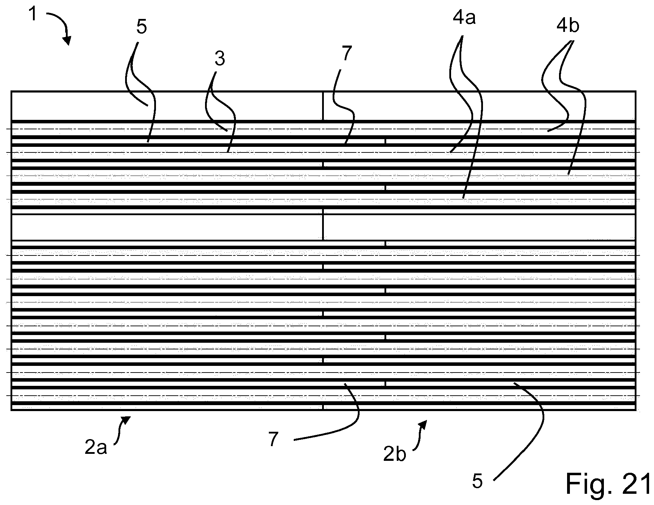

Figur 21 zeigt die Stromführungsanordnung 1 aus den Figuren 19 und 20 nunmehr in einem Zustand, bei dem die Längenausdehnung der Profilelemente 2a, 2b durch Wärmeeinfluss vergrößert ist. Der Spalt 11 zwischen den Profilelementen 2a, 2b ist dabei soweit reduziert, dass sich der Vorsprung 7 in der Nutseitenwand 5 des zweiten Profilelementes 2b nahezu spaltfrei fortsetzt.

Optional ist eine Variation dieser zweiten Ausführungsform denkbar derart, dass sich an einer Stirnseite Vorsprünge 7 und Rücksprünge 8 abwechseln. So kann eine Nutseitenwand 5 unter Bildung eines Vorsprungs 7 verlängert und die angrenzende zweite Nutseitenwand 5 derselben Nut 4a, 4b relativ zu einer Soll-Stirnkante des Hauptkörpers des Profilelementes 2a, 2b zur Bildung eines Rücksprungs verkürzt sein. Eine entsprechende symmetrische Ausbildung ist dann an der gegenüberliegenden Stirnseite des zweiten Profilelementes 2b bzw. desselben Profilelementes 2a auf der diametral gegenüberliegenden Seite vorhanden, so dass die Profilelemente 2a, 2b theoretisch in unendlicher Länge hintereinander gereiht werden können.

## Patentansprüche

1. Stromführungsprofil mit einem elektrisch isolierenden Profilelement (2a, 2b), das parallel nebeneinander in eine Längserstreckungsrichtung (L) des Profilelementes (2a, 2b) erstreckende Nuten (4a, 4b) hat, die durch ein Paar von Nutenseitenwänden (5) begrenzt sind und einen Nutgrund (6) haben, und mit elektrischen Leitern (3), die in den Nuten (4a, 4b) des Profilelementes (2a, 2b) aufgenommen sind und sich parallel nebeneinander in der Längserstreckungsrichtung (L) des Profilelementes (2a, 2b) erstrecken, **dadurch gekennzeichnet, dass** das Profilelement (2a, 2b) Vorsprünge (7) an einer Stirnseite hat, wobei die Vorsprünge (7) als Verlängerung einer Nutseitenwand (5) oder einer Gruppe von Nutseitenwänden (5) mit zwischenliegender Nut (4a, 4b) ausgebildet und zum Eintauchen in einen Rücksprung (8) an einer Stirnseite eines angrenzenden Profilelementes (2a, 2b) ausgebildet sind.

2. Stromführungsprofil nach Anspruch 1, **dadurch gekennzeichnet, dass** das Profilelement (2a, 2b) an den sich in Längserstreckungsrichtung diametral einander gegenüberliegenden Stirnseiten Vorsprünge (7) und/oder Rücksprünge (8) hat.

3. Stromführungsprofil nach Anspruch 1 oder 2, **dadurch gekennzeichnet, dass** das Profilelement (2a, 2b) an einer Stirnseite jeweils alternierend Vorsprünge (7) und Rücksprünge (8) hat.

4. Stromführungsprofil nach einem der Ansprüche 1 bis 3, **dadurch gekennzeichnet, dass** die nebeneinanderliegenden Nuten (4a, 4b) jeweils höhenversetzt zueinander angeordnet sind.

5. Stromführungsprofil nach Anspruch 4, **dadurch gekennzeichnet, dass** eine erste Gruppe von Nuten (4a) mit ihrem Nutgrund (6) eine erste Ebene aufspannen und eine zweite Gruppe von Nuten (4b), die jeweils zwischen zwei Nuten (4a) der ersten Gruppe angeordnet sind, mit ihrem Nutgrund (6) eine zweite Ebene aufspannen, wobei die erste und zweite Ebene höhenversetzt zueinander angeordnet sind.

6. Stromführungsprofil nach einem der Ansprüche 1 bis 5, **dadurch gekennzeichnet, dass** sich diametral gegenüberliegend zu einem Vorsprung (7) auf einer Stirnseite des Profilelementes (2a, 2b) ein Rücksprung (8) an der diametral gegenüberliegenden Stirnseite des Profilelementes (2a, 2b) befindet.

7. Stromführungsprofil nach einem der vorhergehenden Ansprüche, **dadurch gekennzeichnet, dass** die Nuten (4a, 4b) jeweils durch eine an einer Stirnseite längere, vorspringende erste Nutseitenwand (7) auf einer Längsseite einer jeweiligen Nut (4a) und durch eine relativ zur ersten Nutseitenwand (7) kürzere Nutseitenwand (5) auf der anderen Längsseite der jeweiligen Nut (4a) begrenzt ist.

8. Stromführungsprofil nach einem der Ansprüche 1 bis 6, **dadurch gekennzeichnet, dass** die Nutseitenwände (5) einer Nut (4a, 4b) an einer Stirnseite paarweise vorspringen und relativ zu den Nutseitenwänden (5) der benachbarten Nut (4b) an dieser Stirnseite länger sind.

9. Stromführungsprofil nach einem der vorhergehenden Ansprüche, **dadurch gekennzeichnet, dass** das Profilelement (2a, 2b) an den Stirnseiten mit einer Bodenplatte (9) endet, wobei die den Vorsprung (7) bildenden Nutseitenwände (5) über das stirnseitige Ende der Bodenplatte (9) in Längserstreckungsrichtung (L) des Profilelementes (2a, 2b) herausragen und/oder die den Rücksprung (8) bildenden Nutseitenwände (5) in Längserstreckungsrichtung (L) vor dem stirnseitigen Ende der Bodenplatte (9) enden.

10. Stromführungsprofil nach einem der vorhergehenden Ansprüche, **dadurch gekennzeichnet, dass** die Länge des Stromführungsprofils und/oder des Profilelements (2a, 2b) größer als die Breite ist.

11. Stromführungsprofil nach einem der vorhergehenden Ansprüche, **dadurch gekennzeichnet, dass** das Profilelement (2a, 2b) eine erste Stirnseite an einem Ende und eine zweite Stirnseite am in Längsrichtung des Profilelementes (2a, 2b) anderen Ende aufweist, wobei die Profilelemente (2a, 2b) endlos aneinandersetzbar sind, indem die erste Stirnseite eines Profilelementes (2a, 2b) mit der zweiten Stirnseite eines benachbarten Profilelementes (2a, 2b) aneinandergesetzt wird, sodass eine nach Wahl des Anwenders beliebig lange Anordnung von Profilelementen (2a, 2b) und hierdurch eine beliebig lange Stromführungsanordnung (1) gebildet werden kann.

12. Stromführungsprofil nach Anspruch 11, **dadurch gekennzeichnet, dass** die Vorsprünge (7) und/oder Rücksprünge (8) an der ersten Stirnseite als Gegenstück zu Vorsprüngen (7) und/oder Rücksprüngen (8) an der zweiten Stirnseite des Profilelementes (2a, 2b) ausgebildet sind.

13. Stromführungsanordnung (1) mit mehreren in Längserstreckungsrichtung (L) hintereinander angeordneten Stromführungsprofilen nach einem der vorhergehenden Ansprüche, **dadurch gekennzeichnet, dass** die Vorsprünge (7) auf einer Stirnseite eines Profilelementes (2a) in Rücksprünge (8) an einer Stirnseite des angrenzenden Profilelementes (2b) eintauchen, und dass die elektrischen Leiter (3) jeweils in miteinander fluchtende Nuten (4a, 4b) der hintereinander angeordneten Profilelemente (2a, 2b) eingesetzt sind.

## Claims

1. Current-carrying profile comprising an electrically insulating profile element (2a, 2b) which has grooves (4a, 4b) which extend parallel next to one another in a direction of longitudinal extent (L) of the profile element (2a, 2b) and are delimited by a pair of groove side walls (5) and have a groove base (6), and comprising electrical conductors (3) which are accommodated in the grooves (4a, 4b) of the profile element (2a, 2b) and extend parallel next to one another in the direction of longitudinal extent (L) of the profile element (2a, 2b), **characterized in that** the profile element (2a, 2b) has projections (7) on an end side, wherein the projections (7) are designed as an extension of a groove side wall (5) or of a group of groove side walls (5) with an interposed groove (4a, 4b) and are designed for entering a recess (8) on an end side of an adjoining profile element (2a, 2b).

2. Current-carrying profile according to Claim 1, **characterized in that** the profile element (2a, 2b) has projections (7) and/or recesses (8) on the end sides which are situated diametrically opposite one another in the direction of longitudinal extent.

3. Current-carrying profile according to Claim 1 or 2, **characterized in that** the profile element (2a, 2b) has respectively alternating projections (7) and recesses (8) on an end side.

4. Current-carrying profile according to one of Claims 1 to 3, **characterized in that** the grooves (4a, 4b) which are situated next to one another are respectively arranged in a manner vertically offset in relation to one another.

5. Current-carrying profile according to Claim 4, **characterized in that** a first group of grooves (4a) span a first plane by way of their groove base (6) and a second group of grooves (4b), which are respectively arranged between two grooves (4a) of the first group, span a second plane by way of their groove base (6), wherein the first and the second plane are arranged in a manner vertically offset in relation to one another.

6. Current-carrying profile according to one of Claims 1 to 5, **characterized in that**, diametrically opposite a projection (7) on an end side of the profile element (2a, 2b), a recess (8) is located on the diametrically opposite end side of the profile element (2a, 2b).

7. Current-carrying profile according to one of the preceding claims, **characterized in that** the grooves (4a, 4b) are respectively delimited by a projecting first groove side wall (7), which is longer on one end side, on a longitudinal side of a respective groove (4a) and by a groove side wall (5), which is shorter relative to the first groove side wall (7), on the other longitudinal side of the respective groove (4a).

8. Current-carrying profile according to one of Claims 1 to 6, **characterized in that** the groove side walls (5) of one groove (4a, 4b) protrude from an end side in pairs and are longer relative to the groove side walls (5) of the adjacent groove (4b) on this end side.

9. Current-carrying profile according to one of the preceding claims, **characterized in that** the profile element (2a, 2b) ends at the end sides by way of a base plate (9), wherein the groove side walls (5) which form the projection (7) protrude beyond the end-side end of the base plate (9) in the direction of longitudinal extent (L) of the profile element (2a, 2b) and/or the groove side walls (5) which form the recess (8) end in front of the end-side end of the base plate (9) in the direction of longitudinal extent (L).

10. Current-carrying profile according to one of the preceding claims, **characterized in that** the length of the current-carrying profile and/or of the profile element (2a, 2b) is greater than the width.

11. Current-carrying profile according to one of the preceding claims, **characterized in that** the profile element (2a, 2b) has a first end side at one end and a second end side at the other end in the longitudinal direction of the profile element (2a, 2b), wherein the profile elements (2a, 2b) can be continuously placed against one another by way of the first end side of one profile element (2a, 2b) being placed against the second end side of an adjacent profile element (2a, 2b), so that an arrangement of profile elements (2a, 2b) which can be of any desired length in accordance with the choice of the user, and as a result a current-carrying arrangement (1) of any desired length, can be formed.

12. Current-carrying profile according to Claim 11, **characterized in that** the projections (7) and/or recesses (8) are formed on the first end side as mating pieces to protrusions (7) and/or recesses (8) on the second end side of the profile element (2a, 2b).

13. Current-carrying arrangement (1) comprising a plurality of current-carrying profiles which are arranged one behind the other in the direction of longitudinal extent (L) according to one of the preceding claims, **characterized in that** the projections (7) on one end side of a profile element (2a) enter recesses (8) on an end side of the adjoining profile element (2b), and **in that** the electrical conductors (3) are each inserted into grooves (4a, 4b), which are in alignment with one another, of the profile elements (2a, 2b) which are arranged one behind the other.

## Revendications

1. Profilé conducteur de courant présentant
un élément profilé (2a, 2b) électriquement isolant qui possède des rainures (4a, 4b) qui s'étendent parallèlement l'une à l'autre dans une direction (L) d'extension longitudinale de l'élément profilé (2a, 2b), qui sont délimitées par une paire de parois latérales (5) de rainure et qui possèdent un fond (6) de rainure et des conducteurs électriques (3) qui sont repris dans les rainures (4a, 4b) de l'élément profilé (2a, 2b) et qui s'étendent parallèlement l'un à l'autre dans la direction (L) d'extension longitudinale de l'élément profilé (2a, 2b), **caractérisé en ce que** l'élément profilé (2a, 2b) possède des saillies (7) situées sur un côté frontal, les saillies (7) étant configurées comme prolongement d'une paroi latérale (5) de rainure ou d'un groupe de parois latérales (5) de rainure, y compris la rainure (4a, 4b) intermédiaire, et étant configurées pour s'enfoncer dans un retrait (8) prévu sur un côté frontal d'un élément profilé (2a, 2b) adjacent.

2. Profilé conducteur de courant selon la revendication 1, **caractérisé en ce que** l'élément profilé (2a, 2b) possède des saillies (7) et/ou des retraits (8) sur les côtés frontaux diamétralement opposés l'un à l'autre dans la direction d'extension longitudinale.

3. Profilé conducteur de courant selon les revendications 1 ou 2, **caractérisé en ce que** l'élément profilé (2a, 2b) possède des saillies (7) et des retraits (8) qui alternent sur un côté frontal.

4. Profilé conducteur de courant selon l'une des revendications 1 à 3, **caractérisé en ce que** les rainures (4a, 4b) sont disposés avec un décalage en hauteur mutuel.

5. Profilé conducteur de courant selon la revendication 4, **caractérisé en ce que** les fonds (6) d'un premier groupe de rainures (4a) sont disposés dans un premier plan et les fonds (6) d'un deuxième groupe de rainures (4b) disposées entre deux rainures (4a) du premier groupe sont disposés dans un deuxième plan, le premier et le deuxième plan étant disposés en décalage mutuel en hauteur.

6. Profilé conducteur de courant selon l'une des revendications 1 à 5, **caractérisé en ce qu'**un retrait (8) diamétralement opposé à une saillie (7) située sur un côté frontal de l'élément profilé (2a, 2b) est situé sur le côté frontal diamétralement opposé de l'élément profilé (2a, 2b).

7. Profilé conducteur de courant selon l'une des revendications précédentes, **caractérisé en ce que** sur un côté longitudinal d'une rainure (4a), les rainures (4a, 4b) sont délimitées par une première paroi latérale (7) de rainure en saillie, plus longue sur un côté frontal, et sur l'autre côté longitudinal de la rainure (4a) par une paroi latérale (5) de rainure, plus courte que la première paroi latérale (7) de rainure.

8. Profilé conducteur de courant selon l'une des revendications 1 à 6, **caractérisé en ce que** les parois latérales (5) d'une rainure (4a, 4b) débordent par paires sur un côté frontal et sont plus longues sur ce côté frontal que les parois latérales (5) de la rainure (4b) voisine.

9. Profilé conducteur de courant selon l'une des revendications précédentes, **caractérisé en ce que** sur les côtés frontaux, l'élément profilé (2a, 2b) se termine par une plaque de fond (9), les parois latérales (5) de rainure qui forment la saillie (7) débordant au-delà de l'extrémité frontale de la plaque de fond (9) dans la direction (L) d'extension longitudinale de l'élément profilé (2a, 2b) et/ou les parois latérales (5) de rainure qui forment la retrait (8) se terminent dans la direction (L) d'extension longitudinale en avant de l'extrémité frontale de la plaque de fond (9).

10. Profilé conducteur de courant selon l'une des revendications précédentes, **caractérisé en ce que** la longueur du profilé conducteur de courant et/ou de l'élément profilé (2a, 2b) est supérieure à leur largeur.

11. Profilé conducteur de courant selon l'une des revendications précédentes, **caractérisé en ce que** l'élément profilé (2a, 2b) présente un premier côté frontal à une extrémité et un deuxième côté frontal à l'autre extrémité de l'élément profilé (2a, 2b) dans le sens de la longueur, les éléments profilés (2a, 2b) pouvant être placés l'un contre l'autre en plaçant le premier côté frontal d'un élément profilé (2a, 2b) contre le deuxième côté frontal d'un élément profilé (2a, 2b) voisin de telle sorte qu'il est possible de former au choix de l'utilisateur un agencement de longueur quelconque d'éléments profilés (2a, 2b) et ainsi un agencement (1) conducteur de courant de longueur quelconque.

12. Profilé conducteur de courant selon la revendication 11, **caractérisé en ce que** les saillies (7) et/ou les retraits (8) du premier côté frontal sont configurés comme pièces complémentaires aux saillies (7) et/ou aux retraits (8) du deuxième côté frontal de l'élément profilé (2a, 2b).

13. Agencement (1) conducteur de courant présentant plusieurs profilés conducteurs de courant disposés les uns derrière les autres dans la direction (L) d'extension longitudinale selon l'une des revendications précédentes, **caractérisé en ce que** les saillies (7) d'un côté frontal d'un élément profilé (2a) s'enfoncent dans des retraits (8) d'un côté frontal de l'élément profilé (2b) adjacent et **en ce que** les conducteurs électriques (3) sont insérés dans des rainures (4a, 4b) alignées l'une sur l'autre des éléments profilés (2a, 2b) disposés les uns derrière les autres.
